# EUROPÄISCHE PATENTSCHRIFT

(11) **EP 1 614 572 B1**
(45) Veröffentlichungstag und Bekanntmachung des Hinweises auf die Patenterteilung: **26.12.2007**
(21) Anmeldenummer: 05400020.3
(22) Anmeldetag: 01.07.2005
(51) Int. Cl.: B60J 7/14, B60J 7/04

(54) **Fahrzeugdacheinheit zum Schliessen und Freigeben einer Fahrzeugdachöffnung und hiermit ausgestattetes Kraftahrzeug**
Roof assembly for vehicle for opening and closing of a roof opening and a vehicle equipped with it
Assemblage de toit de véhicule pour fermer et ouvrir une ouverture de toit, et un véhicule équipé avec tel assemblage

(30) Priorität: 07.07.2004 DE 102004032804
(43) Veröffentlichungstag der Anmeldung: 11.01.2006
(73) Patentinhaber: GM Global Technology Operations, Inc., Detroit, MI 48265-3000 (US)
(72) Erfinder: Blobel, Andreas, 65468 Trebur-Geinsheim (DE)
(74) Vertreter: Daniel, Ulrich W.P.

(56) Entgegenhaltungen:
- EP-A- 0 641 683
- EP-A- 0 850 792
- EP-A- 1 331 120
- WO-A-03/076220
- DE-A1- 3 635 888
- DE-C1- 10 025 051
- DE-C1- 19 706 444

## Beschreibung

Die vorliegende Erfindung betrifft ein Kraftfahrzeug gemäß dem Oberbegriff des Anspruchs 1, wie in der WO 03/076220 offenbart wird, sowie eine Fahrzeugdacheinheit gemäß Anspruch 10.

Aus der Praxis sind Kraftfahrzeuge mit einer Dachöffnung bekannt, wobei die Dachöffnung mittels eines Schiebe- bzw. Hubdachs freigegeben und erneut geschlossen werden kann. Das Schiebe- bzw. Hubdach weist Dachelemente auf, welche beim Öffnen der Dachöffnung bzw. des Sonnendachs unter bzw. über feststehende, nicht zu öffnende Anteile des Fahrzeugdachs verstaut werden.

Aus der Praxis sind jedoch auch Kraftfahrzeuge mit Dachöffnungen bekannt, deren Dachelemente beim Freigeben in einem Fahrzeugraum verstaut werden, wobei es sich bei diesem Stauraum nicht um das Fahrzeugdach selbst handelt. Eine solche Dachöffnungsvorrichtung ist beispielsweise in der EP 0 989 009 A1 offenbart. Die dort vorgeschlagene Dachkonstruktion weist rolloartig senkrecht zur Fahrtrichtung des Kraftfahrzeugs verlaufende Dachlamellen auf. Diese werden ähnlich einer Dachjalousie in einem hinteren Abschnitt des Kraftfahrzeugs aufgerollt bzw. gesammelt, um gemeinsam beispielsweise im Kofferraum des Fahrzeugs verstaut zu werden, solange das Fahrzeug mit geöffnetem Dach genutzt werden soll.

Die hierbei vorgeschlagene Vorrichtung weist jedoch einen Nachteil dahingehend auf, dass die einzelnen, rolloartig aufeinander folgenden Dachsegmente am linken sowie am rechten Fahrzeugdachrand geführt werden müssen. Bedingt durch den für diese beiderseitige Führung erforderlichen Bauraum verringert sich zwangsläufig die mögliche Breite einer ebenfalls als Rolloelement ausgestalteten Heckscheibe.

Ferner ist mit der in der oben genannten EP 0 989 009 A1 vorgeschlagenen Dachöffnungsvorrichtung ein heute im Kraftfahrzeugbau angestrebtes trapezförmiges, in Richtung auf das vordere Fahrzeugende bzw. zur Fahrzeugfront hin breiter werdendes Fahrzeugdach nur dann zu realisieren, wenn links und rechts dreieckige Dachabschnitte in Kauf genommen werden, welche aufgrund der parallel auszuführenden, über die gesamte Dachöffnung hinweg konstanten Dachelementbreite nicht geöffnet werden können. Diese in jeweils dreieckiger Form im vorderen Fahrzeugdachbereich bei geöffneter Dachöffnung verbleibende Dachabschnitte sind jedoch aus Gründen des Designs unerwünscht.

Eine Dachöffnungsvorrichtung für ein im Wesentlichen vollständig zu öffnendes Fahrzeugdach mit abnehmbarem Hardtop wird in der EP 1 065 085 B1 vorgeschlagen. Bei dieser Dachöffnungsvorrichtung besteht der in Fahrtrichtung hinter der Windschutzscheibe gelegene Dachabschnitt im Wesentlichen aus zwei, sich über die gesamte Fahrzeugbreite erstreckende Dachelemente. Diese Dachelemente werden zum Freigeben der Dachöffnung zunächst als Ganzes um einen im hinteren Fahrzeugbereich liegenden Drehpunkt geschwenkt bzw. gedreht und dabei nach oben aufgeklappt. In einem sich hieran anschließenden Schritt wird das vordere der beiden Dachelemente parallel zum hinteren Dachelement geführt und zugleich unter dieses verschoben. Anschließend wird der Verbund der beiden aufeinander liegenden Dachelemente in einen Raum hinter der Fahrgastzelle eingefahren bzw. in diesem verstaut. Wird dieser Stauraum zugleich beispielsweise als Kofferraum verwendet, so wurde bislang ein Zwischenboden des Laderaums mit der Öffnung der Dachelemente kinematisch zwangsgekoppelt angehoben und nach Ablegen der Dachteile unterhalb dieses Laderaumzwischenbodens wieder in die waagrechte Ausgangsstellung gebracht.

Als nachteilig hat sich hierbei erwiesen, dass das Fahrzeug nur im vollständig geöffneten oder aber im vollständig geschlossenen Zustand nutzbar war. Das Ausstellen beider, im Wesentlichen die gesamte Fahrzeugdachlänge ausmachender Dachelemente um den im hinteren Fahrzeugabschnitt liegenden Drehpunkt erlaubt keinen Fahrbetrieb. Ein teilweises Öffnen der Dachöffnung zum Zwecke des Lüftens oder als Sonnendach ist mit dieser Vorrichtung somit nicht möglich.

Ein weiterer Nachteil dieser Vorrichtung besteht darin, dass das aus den Dachelementen bestehende "Dachpaket " unterhalb des Laderaumzwischenbodens verstaut wird, wobei die untere Laderaumabdeckung beim Öffnen bzw. Schließen des Dachs angehoben und gegen die Waagrechte geneigt werden muss. Der Lade- bzw. Kofferraum darf zum Öffnen und zum Schließen des Daches daher kein Ladegut wie Gepäck, Ersatzrad oder dgl. enthalten. Er ist zum Öffnen bzw. Schließen des Daches freizuräumen bzw. vollständig zu entleeren.

Die in der oben genannten EP 1 065 085 B1 vorgeschlagene Dachöffnungsvorrichtung ist ferner für Fahrzeuge mit vergleichsweise langem Dach nur bedingt geeignet. Bei diesen muss ein vorderes Dachteil vielmehr stets am Fahrzeug verbleiben und die Dachöffnung kann in diesem vorderen Dachbereich nicht geöffnet werden, da der im allgemeinen zum Verstauen der Dachelemente zur Verfügung stehende Stauraum in seinem Dimensionen begrenzt ist und nicht unbegrenzt lange Dachelemente aufnehmen kann.

Die EP 1 331 120 A offenbart ein Fahrzeug mit einem Sonnendach, bei dem das Sonnendach mehrere Dachelemente besitzt, die mit einer Dachkinematik in eine liegende Position im Kofferraum geschwenkt werden.

Aufgabe der vorliegenden Erfindung ist es daher unter Vermeidung der oben genannten Nachteile ein Kraftfahrzeug mit einer Dachöffnung und einer Fahrzeugdacheinheit zum Schließen und Freigeben der Dachöffnung vorzuschlagen, welche auch ein nur teilweises Öffnen der Dachöffnung derart erlaubt, dass das Fahrzeug mit nur teilweise geöffneter Dachöffnung gefahren werden kann.

Ein weiterer Aspekt der vorliegende Erfindung liegt darin, ein Kraftfahrzeug zu schaffen, dessen Dachelemente in einem Stauraum verstaubar sind, ohne dass dieser Stauraum zuvor vollständig von Gepäck bzw. Zuladung freigeräumt bzw. vollständig geleert ist.

Ferner ist es Ziel der vorliegenden Erfindung, eine entsprechende Fahrzeugdacheinheit vorzuschlagen.

Die erfindungsgemäße Aufgabe wird durch ein Kraftfahrzeug gemäß dem Anspruch 1 sowie durch eine Fahrzeugdacheinheit gemäß dem Anspruch 10 gelöst.

So schlägt die vorliegende Erfindung ein Kraftfahrzeug mit einer Dachöffnung und einer Fahrzeugdacheinheit zum Schließen und Freigeben der Dachöffnung vor, wobei die Fahrzeugdacheinheit wenigstens zwei Dachelemente aufweist, von denen ein Dachelement zum Freigeben wenigstens eines Teils der Dachöffnung mittels einer ersten Dachkinematik in Richtung auf ein zweites Dachelement bewegbar ist. Die Fahrzeugdacheinheit weist ferner eine zweite Dachkinematik auf, mittels welcher die Dachelemente wenigstens teilweise in einen Stauraum des Kraftfahrzeugs hinein bewegbar sind. Die zweite Dachkinematik weist eine fahrzeugfeste Drehvorrichtung auf, mittels welcher eines der Dachelemente anlenkbar ist. Zumindest das in Fahrtrichtung vorderste Dachelement ist zum Öffnen eines Teils der Dachöffnung mittels der ersten Dachkinematik im Wesentlichen horizontal derart verschiebbar, dass sich das Kraftfahrzeug auch bei nur teilweise geöffneter Dachöffnung in einem fahrbereiten Zustand befindet.

Beim erfindungsgemäßen Kraftfahrzeug ist es auf Wunsch vorteilhaft möglich, nur einen Teil im vorderen Abschnitt der Dachöffnung zum Lüften oder als Sonnendach zu öffnen und das Fahrzeug trotz der teilgeöffneten Dachöffnung weiter fahren zu können. Dies ist deshalb möglich, da zumindest das in Fahrtrichtung vorderste Dachelement bei seinem Öffnen im Wesentlichen horizontal verschiebbar ist. Ein Aufstellen dieses Dachelements in einer vertikalen Richtung wie beim Stand der Technik ist beim erfindungsgemäßen Kraftfahrzeug nicht vorgesehen. Das Dachelement kann vielmehr in engem Abstand zur Fahrzeugdachebene geführt werden. Es bietet folglich auch im teilgeöffneten Zustand des Dachs keinen besonderen Luftwiderstand, wodurch Fahrtgeräusche vorteilhaft entfallen.

Vorteilhafte Weiterentwicklungen der vorliegenden Erfindung sind jeweils Gegenstand der Unteransprüche.

So ist in einer bevorzugten Ausführungsform zumindest das in Fahrtrichtung vorderste Dachelement mittels der ersten Dachkinematik unabhängig von der Funktion bzw. Wirkung der zweiten Dachkinematik zum Freigeben der Dachöffnung bzw. eines Teils hiervon verschiebbar.

Ein Vorteil dieser Ausführungsform besteht darin, dass die kinematische Trennung bzw. Unabhängigkeit der ersten Dachkinematik von der zweiten Dachkinematik beim Öffnen des vordersten Dachelements eine im Wesentlichen waagrechte Verschiebung des vordersten Dachelements ermöglicht, obwohl die zweite Dachkinematik zum Verstauen der Dachelemente in einem Stauraum des Kraftfahrzeugs eher als Drehkinematik ausgestaltet sein muss. Ferner erlaubt die funktionelle Trennung zwischen erster Dachkinematik und zweiter Dachkinematik ein getrenntes Öffnen des vordersten Dachelements, ohne zugleich auch die hinteren Abschnitte der Dachöffnung öffnen oder wenigstens anheben zu müssen. Dies ermöglicht vorteilhaft bspw. eine Nutzung nur eines Teils eines Hardtops als herkömmliches, auf den vorderen Dachabschnitt begrenztes Sonnendach.

Eine wiederum weiter bevorzugte Ausführungsform ist dadurch gekennzeichnet, dass das vorderste Dachelement unabhängig von weiteren Dachelementen bewegbar ist. Diese Ausführungsform ermöglicht vorteilhaft die zuvor bereits genannte unabhängige Öffnung bzw. Teilöffnung des vordersten Dachelementes beispielsweise zum Zwecke der Lüftung. Eine kinematische Zwangskopplung des vordersten Dachelementes mit wenigstens einem weiteren Dachelement würde genau diese Möglichkeit jedoch unterbinden.

In einer wiederum weiter bevorzugten Ausführungsform weist das erfindungsgemäße Kraftfahrzeug eine Fahrzeugdacheinheit mit mehr als zwei Dachelementen auf. Dies ist insbesondere bei Fahrzeugen mit einem besonders langen Fahrzeugdach von Vorteil, da eine mehrfache Unterteilung des Dachs in mehr als nur zwei Dachelemente ein vollständiges Verstauen aller Dachelemente in einem Stauraum des Kraftfahrzeugs ermöglicht. Dieser Stauraum muss hierbei keine besonders große Abmessungen aufweisen. Dies ist insbesondere dann von Bedeutung, weil die im Stauraum des Kraftfahrzeugs verstauten Dachelemente in diesem im Wesentlichen senkrecht positioniert sind, da die Abmessung eines Stauraums wie beispielsweise eines Kofferraums in einer senkrechten Richtung in aller Regel kürzer bzw. kleiner als beispielsweise in dessen horizontaler Abmessung ist.

Ein senkrechtes Verstauen ermöglicht jedoch eine ungehinderte Nutzung des restlichen Stauraums für Gepäck oder dergleichen. Dies wäre nicht der Fall, wenn die Dachelemente im Wesentlichen waagrecht im Stauraum positioniert werden würden. In letzterem Fall müsste im Stauraum vorhandenes Gepäck oder dgl. vor dem Verstauen der Dachelemente aus dem Stauraum entnommen werden, um ausreichend Platz für das Ablegen der Dachelemente auf dem Boden des Stauraums zu schaffen. Dies würde jedoch einen zusätzlichen Aufwand beim Öffnen der Dachöffnung bedeuten.

Nach dem Verstauen der Dachelemente in waagrechter Position im Laderaum kann der verbleibende Stauraum im Stand der Technik ferner nicht erneut beladen werden, da die im Stauraum horizontal gelagerten Dachelemente zur Vermeidung ihrer Beschädigung nicht mit Gepäck beladen werden dürfen. Zudem wäre bei der Lösung des Standes der Technik ein erneutes Entnehmen der Dachelemente aus dem Laderaum nicht ermöglichen, ohne zuvor das auf den Dachelementen ruhende Gepäck herausgenommen zu haben.

Doch auch ein Ablegen der Dachelemente auf bzw. oberhalb sich bereits im Stauraum befindenden Gepäcks oder dgl. ist mit Nachteilen verbunden. Zwar entfällt das oftmals mühsame Herausräumen des bereits vorhandenen Gepäcks, wenn die Dachelemente auf diesem abgelegt werden. Jedoch bleibt die Gefahr der Beschädigung der Dachelement durch das bereits im Stauraum vorhandene Gepäck oder dgl. bestehen. Ferner verhindern die waagrecht auf dem Gepäck abgelegten Dachelemente den Zugang zu diesem.

Mit der erfindungsgemäß vorgeschlagenen senkrechten Positionierung der Dachelemente im Stauraum treten all diese Probleme hingegen nicht auf. Das erfindungsgemäße, im Wesentlichen senkrechte Verstauen der Dachelemente im Stauraum erlaubt vielmehr vorteilhaft ein vergleichsweise rasches und müheloses Verstauen der Dachelemente und ihr erneutes Herausnehmen ohne Gepäck aus- bzw. wieder einräumen zu müssen.

In einer wiederum weiter bevorzugten Ausführungsform ist die jeweils zu öffnende Heckklappe, Heckscheibe oder Hecktür hindurch im Stauraum des Kraftfahrzeugs verstaubar.

Bei einer wiederum weiter bevorzugten Ausführungsform ist zum Verstauen der Dachelemente im Stauraum ein Teil eines diesen nach unten hin begrenzenden Bodens in eine im Wesentlichen senkrechte Stellung umklappbar bzw. aufstellbar.

Der hierbei senkrecht gestellte Teil des Bodens ist geeignet, den Stauraum derart zu unterteilen, dass zusätzlich im Stauraum vorhandene Gepäckstücke selbst bei entsprechenden Fahrmanövern, wie heftigem Abbremsen oder Beschleunigen des Fahrzeugs sowie Kurvenfahrt nicht mit den Dachelementen in Kontakt treten können. Eine Beschädigung der Dachelemente im Stauraum wird somit wirkungsvoll verhindert. Da die Zuladung bzw. das Gepäck bei dieser Ausführungsform die Dachelemente nicht beschädigen kann, ist zugleich auch das ebenfalls im Stauraum untergebrachte Gepäck und dgl. davor geschützt, durch die Dachelemente beschädigt zu werden.

Ein wiederum weiterer Vorteil dieser Ausführungsform des erfindungsgemäßen Kraftfahrzeugs besteht darin, dass anders als im Stand der Technik nicht die gesamte Bodenfläche frei von Gepäckstücken oder anderen Gegenständen sein muss, bevor die Dachelemente im Stauraum verstaut bzw. aus diesem wieder entnommen werden können. Es genügt vielmehr, wenn der zum Verstauen der Dachelemente senkrecht zu stellende Teil des Stauraums frei von Gepäck bzw. Zuladung gehalten wird.

Bei einer wiederum weiter bevorzugten Ausführungsform des erfindungsgemäßen Kraftfahrzeugs weist die zweite Dachkinematik zum Verstauen der Dachelemente auf jeder Fahrzeugseite zwei Hebel auf, welche jeweils beide an einem der Dachelemente (im folgenden "Leitelement" genannt) drehbar befestigt sind. Sie sind zugleich um je einen fahrzeugfesten Drehpunkt drehbar. Die an einem gemeinsamen Dachelement angreifenden Hebel erlauben auf Grund ihrer unterschiedlichen Drehradien und ihrer nicht identischen fahrzeugfesten Drehpunkte eine nahezu beliebige Führbarkeit des Leitelements und somit ein besonders präzises, den konstruktiven Gegebenheiten angepasstes Einführen dieses "Leitelements" sowie weiterer, mit diesem gekoppelter Dachelemente in den Stauraum. Die Führung des "Leitelements" durch die auf jeder Fahrzeugseite vorliegenden zwei Hebel erlaubt ferner eine bessere Ausbalancierung des Gewichtes der Dachelemente während des Verstauvorgangs der Dachelemente sowie des erneuten Schließens der Dachöffnung derart, dass einzelne Bauteile der Dachkinematik kleiner, leichter, platzsparender und kostengünstiger hergestellt werden können.

In einer weiter bevorzugten Ausführungsform sind die Funktionen der ersten Dachkinematik und die Funktionen der zweiten Dachkinematik in einer gemeinsamen Mechanik realisiert. Ein Zusammenfassen der ersten und der zweiten Dachkinematik kann vorteilhaft zu einer Einsparung von Bauteilen führen. Sie kann ferner bei entsprechender Abstimmung der ursprünglich der ersten sowie der zweiten Dachkinematik jeweils zugeordneten Funktionen beim Öffnen und Verstauen des Fahrzeugdachs mittels eines gemeinsamen Antriebsmotors verwirklicht werden. Eine Kostenreduzierung sowie eine Reduzierung des erforderlichen Herstellaufwandes sowie des Gesamtgewichts der insgesamt benötigten Dachkinematik ist mit der vorliegenden Ausführungsform daher ebenso möglich, wie die Verringerung der Fehleranfälligkeit der gesamten Dachöffnevorrichtung.

Das erfindungsgemäße Kraftfahrzeug einer jeden vorangegangenen Ausführungsform kann in einer weiter bevorzugten Ausführungsform mit einem fahrzeugfesten Windabweiser ausgestaltet sein. Ebenso gut kann jedoch auch ein zusammen mit der Fahrzeugdacheinheit ausklappbarer Windabweiser vorgesehen sein. Insbesondere bei einem zusammen mit der Fahrzeugdacheinheit ausklappbaren Windabweiser kann dessen Auf- bzw. Ausstellmechanik vorteilhaft funktionell mit einer Dachkinematik für die Fahrzeugdacheinheit gekoppelt sein. Dies ermöglicht wiederum eine Einsparung von Bauteilen und hiermit verbunden eine Kosten- und Platzeinsparung.

Die vorliegende Erfindung betrifft ferner eine Fahrzeugdacheinheit zum Schließen und Freigeben der Dachöffnung, welche wenigstens ein Merkmal der oben in verschiedenen Ausführungsformen diskutierten Fahrzeugdacheinheit des erfindungsgemäßen Kraftfahrzeugs aufweist. Die hiermit erzielbaren Vorteile entsprechen den oben genannten. Ihre vorteilhaften Wirkungen können ungeschmälert auch mit der erfindungsgemäßen Fahrzeugdacheinheit erzielt werden, so dass an dieser Stelle ausdrücklich auf ihre oben stehende Diskussion verwiesen wird, insbesondere, wenn die Fahrzeugdacheinheit als Hardtop ausgestaltet ist.

Die vorliegende Erfindung wird zum besseren Verständnis an Hand exemplarischer Ausführungsformen unter Bezug auf die angehängte Zeichnung detailliert erläutert. Gleiche Bezugszeichen bezeichnen hierbei gleiche oder ähnliche Bauteile. In der Zeichnung gilt:
- Fig. 1: zeigt einen schematisch vereinfachten hinteren Fahrzeugabschnitt mit einer Dachöffnung und mit einer drei Dachelemente aufweisenden, erfindungsgemäßen Fahrzeugdacheinheit zum Freigeben und Schließen der Dachöffnung; Fig. 1 stellt das Öffnen des vordersten Dachelements dar;
- Fig. 2: zeigt in der Ansicht der Fig. 1 das Öffnen eines zweiten Dachelements der erfindungsgemäßen Fahrzeugdacheinheit;
- Fig. 3: zeigt in der Ansicht der Fig. 1 ein alternatives Öffnen des zweiten Dachelements der erfindungsgemäßen Fahrzeugdacheinheit;
- Fig. 4: zeigt in der Ansicht der Fig. 1 ein wiederum alternatives Öffnen des zweiten Dachelements der erfindungsgemäßen Fahrzeugdacheinheit;
- Fig. 5: zeigt in der Ansicht der Fig. 1 ein gemeinsames Absenken der zusammengeführten Dachelemente mittels einer Dachkinematik; und
- Fig. 6: zeigt in der Ansicht der Fig. 1 ein gemeinsames Ablegen der zusammengeführten Dachelemente in einem Stauraum des Kraftfahrzeugs.

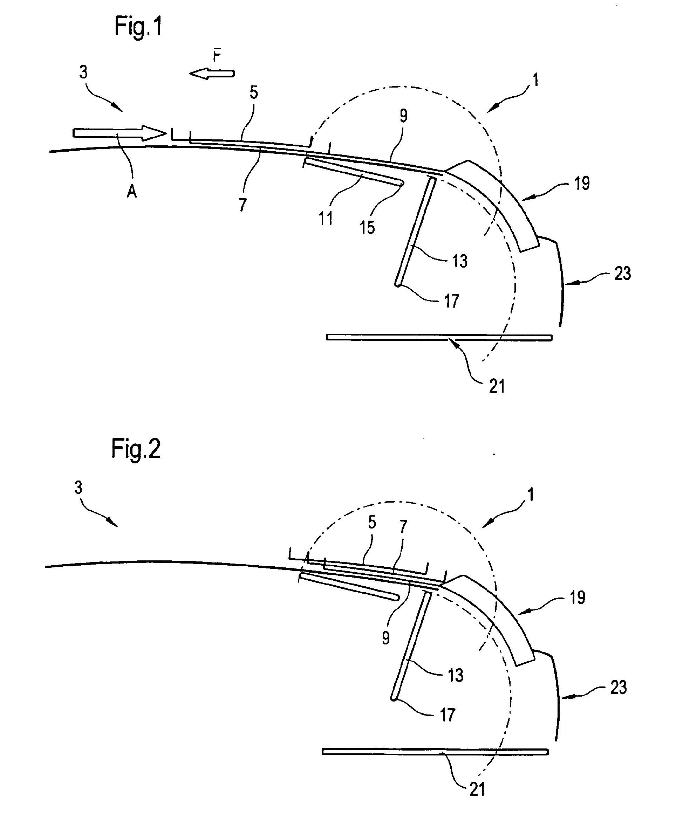

Fig. 1 zeigt einen schematisch vereinfachten hinteren Fahrzeugabschnitt 1 mit einer Dachöffnung 3 und einer drei Dachelemente 5, 7 und 9 aufweisenden erfindungsgemäßen Fahrzeugdacheinheit zum Freigeben und Schließen der Dachöffnung 3. In Fig. 1 ist das in einer Fahrtrichtung F vorderste Dachelement 5 in Richtung des Pfeils A verschoben, um den vorderen Teil der Dachöffnung 3 teilweise zu öffnen, während die beiden Dachelemente 7 und 9 den verbleibenden Abschnitt der Dachöffnung 3 unverändert geschlossen halten. Zum Öffnen des Dachelements 5 kann eine (nicht dargestellte) herkömmliche erste Dachkinematik zum Einsatz kommen, wie sie bspw. von auf dem Markt erhältlichen Schiebedächern her bekannt ist.

Fig. 1 zeigt ferner zwei Drehhebel 11 und 13, welche jeweils drehbar am hintersten Dachelement 9 befestigt sind. Beide Drehhebel 11 und 13 sind mit ihrem jeweils zweiten Ende ferner drehbar auf der linken Seite des Kraftfahrzeugs 1 in zwei Drehpunkten 15 und 17 gelagert. Sie ermöglichen ein geführtes Ablegen der Dachelemente 5, 7 und 9, welches untenstehend beschrieben wird. In Fig. 1 sind ferner eine Heckscheibe 19, ein Ladeboden 21 und eine Hecktür bzw. Heckklappe 23 des Kraftfahrzeugs 1 schematisch angedeutet.

Die Fig. 2, 3 und 4 stellen drei alternative Möglichkeiten zum Öffnen des zweiten Dachelements 7 der erfindungsgemäßen Fahrzeugdacheinheit dar. Diese werden nachstehend erläutert.

In Fig. 2 ist ein Öffnen des zweiten Dachelements 7 durch gemeinsames Verschieben des ersten Dachelements 5 mit dem zweiten Dachelement 7 über das dritte Dachelement 9 dargestellt. Auch dieses Verschieben erfolgt durch die oben genannte erste Dachkinematik oder eine (wiederum nicht näher dargestellte) zusätzliche Dachkinematik, die hier nicht weiter zu diskutieren ist, da sie dem Fachmann bekannt ist.

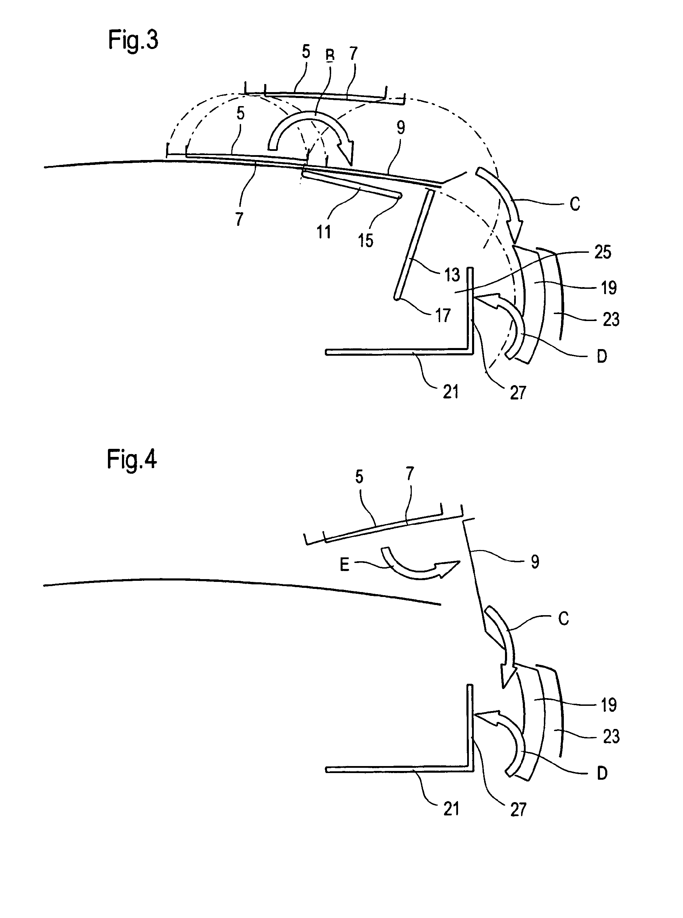

Fig. 3 stellt das Zusammenführen der drei Dachelemente 5, 7 und 9 dar. Ferner ist in Fig. 3 bereits ein Absenken der Heckscheibe 19 entlang des Verlaufs des Pfeils C dargestellt. Das Absenken der Heckscheibe 19 ist eine Möglichkeit, einen Stauraum 25 derart zu eröffnen, dass die Dachelemente 5, 7 und 9 durch die geöffnete Heckscheibe 19 gemeinsam in diesem verstaut werden können. Anschließend schließt sich die Heckscheibe 19 wieder. Statt der Heckscheibe 19 könnte auch die Heckklappe bzw. -tür 23 zum Hindurchführen der Dachelemente 5 bis 9 geöffnet werden.

Zum senkrechten Verstauen der drei Dachelemente 5, 7 und 9 im Stauraum 25 bei gleichzeitig gewährtem Schutz der Dachelemente vor Beschädigung durch ebenfalls im Stauraum 25 verstautes Gepäck oder dgl. wird ein Abschnitt 27 des Ladebodens 21 senkrecht geklappt, wie durch den Pfeil D angedeutet. Er steht somit schützend zwischen den Dachelementen 5, 7 und 9 und dem ggf. mit Gepäck beladenen vorderen Abschnitt des Stauraums 25.

Fig. 3 zeigt nur eine alternative Möglichkeit, um das erste Dachelement 5 sowie das zweite Dachelement 7 mit dem dritten Dachelement 9 zusammenzuführen. Beide Dachelemente 5 und 7 werden entsprechend einer durch einen Pfeil B angedeuteten Bewegung angehoben und über das dritte Dachelement 9 bewegt. Wie an der gegenüber den Fig. 1 und 2 unveränderten Stellungen der Drehhebel 11 und 13 zu erkennen ist, kann dieser Schritt während des vollständigen Freigebens der Dachöffnung 3 ohne Einsatz der Drehhebel 11 und 13 erfolgen.

Die in Fig. 3 gezeigte Bewegung der Dachelemente 5 und 7 erfolgt beispielhaft mittels einer nicht dargestellten Mechanik des Standes der Technik. Es ist jedoch möglich, auch die Funktionen dieser nicht dargestellten Mechanik von der weiter unten erläuterten zweiten Dachkinematik übernehmen zu lassen.

Dasselbe gilt auch für die Funktionen einer wiederum nicht dargestellten Dachkinematik, welche bei dem in Fig. 4 gezeigten Öffnen und Zusammenführen der Dachelemente 5, 7 und 9 zum Einsatz kommt. Hierbei werden das erste Dachelement 5 und das zweite Dachelement 7 entlang des Pfeils E angehoben und unter das zwischenzeitlich ebenfalls bereits von der zweiten Dachkinematik angehobene dritte Dachelement 9 geklappt. Im weiteren Verlauf werden die drei Dachelemente 5, 7 und 9 gemeinsam mittels der zweiten Dachkinematik abgesenkt und verstaut.

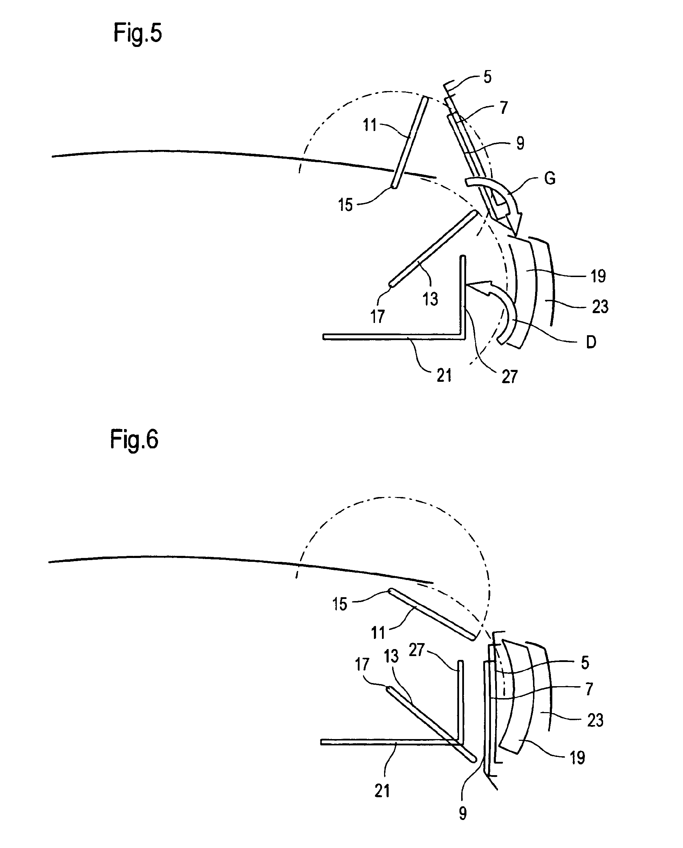

Die Fig. 5 und 6 zeigen, wie das Paket aus den drei Dachelementen 5, 7 und 9 mittels der Drehhebel 11 und 13 um die Drehpunkte 15 und 17 entlang der durch einen Pfeil G angedeuteten Bahn hinter dem bereits aufgestellten Abschnitt 27 abgelegt werden. Nicht dargestellt ist in der Zeichnung, dass nach dem Ablegen des Pakets der Dachelemente 5, 7 und 9 die Heckscheibe 19 erneut geschlossen werden kann. Ebenso ist nicht gezeigt, dass zum Schließen der Dachöffnung 3 die oben diskutierten Schritte in umgekehrter Richtung ablaufen. Dies erschließt sich dem Fachmann jedoch ohne weitere Erläuterung.

Für den Fachmann ist offensichtlich, dass Merkmale der oben diskutierten alternativen Arten des Aufklappens der Dachelemente zum Freigeben der Dachöffnung auch miteinander kombiniert werden können, sollten die gegebenen Umstände dies als sinnvoll erachten lassen. Die oben diskutierten und in den Fig. 2, 3 und 4 dargestellten Vorgehensweisen schließen einander daher nicht aus.

Die vorliegende Erfindung schlägt somit erstmals ein Kraftfahrzeug mit einer Dachöffnung und einer Fahrzeugdacheinheit zum Schließen und Freigeben der Dachöffnung mit wenigstens zwei Dachelementen vor, wobei eines der wenigstens zwei Dachelemente mittels einer ersten Dachkinematik auf das zweite Dachelement zuführbar ist, und wobei beide Dachelemente mittels einer zweiten Dachkinematik in einem Stauraum des Kraftfahrzeugs verstaubar sind. Zumindest das in Fahrtrichtung vorderste Dachelement ist hierbei im Wesentlichen horizontal derart verschiebbar, dass sich das Kraftfahrzeug auch bei nur teilweiser geöffneter Dachöffnung in einem fahrbereiten Zustand befindet. Die vorliegende Erfindung schlägt ferner eine entsprechende Fahrzeugdacheinheit vor.

### Bezugszeichenliste

- 1: Kraftfahrzeug bzw. Fahrzeugabschnitt
- 2:
- 3: Dachöffnung
- 4:
- 5: Dachelement
- 6:
- 7: Dachelement
- 8:
- 9: Dachelement
- 10:
- 11: Drehhebel
- 12:
- 13: Drehhebel
- 14:
- 15: Drehpunkt
- 16:
- 17: Drehpunkt
- 18:
- 19: Heckscheibe
- 20:
- 21: Ladeboden
- 22:
- 23: Heckklappe
- 24:
- 25: Stauraum
- 26:
- 27: Abschnitt

## Patentansprüche

1. Kraftfahrzeug (1) mit einer Dachöffnung (3) und einer Fahrzeugdacheinheit zum Schließen und Freigeben der Dachöffnung (3), wobei die Fahrzeugdacheinheit aufweist:
wenigstens zwei Dachelemente (5, 9),
eine erste Dachkinematik, mittels welcher wenigstens ein Dachelemente (5) zum Freigeben wenigstens eines Teils der Dachöffnung in Richtung auf ein zweites Dachelement (9) bewegbar ist,
eine zweite Dachkinematik, mittels welcher die Dachelemente (5, 9) wenigstens teilweise in einen Stauraum (25) des Kraftfahrzeugs (1) hinein bewegbar sind, wobei die zweite Dachkinematik eine fahrzeugfeste Drehvorrichtung (11, 13) aufweist, welche an einem der Dachelemente (9) befestigt ist,
wobei zumindest das in Fahrtrichtung vorderste Dachelement (5) zum Öffnen eines Teils der Dachöffnung (3) mittels der ersten Dachkinematik im wesentlich horizontal verschiebbar ist
**dadurch gekennzeichnet,**
**dass** die im Stauraum (25) des Kraftfahrzeugs (1) verstauten Dachelemente (5, 7, 9) in diesem im Wesentlichen senkrecht positioniert sind.

2. Kraftfahrzeug (1) nach Anspruch 1, **dadurch gekennzeichnet, dass** zumindest das in Fahrtrichtung F vorderste Dachelement (5) mittels der ersten Dachkinematik unabhängig von der zweiten Dachkinematik verschiebbar ist.

3. Kraftfahrzeug (1) nach Anspruch 1 oder 2, **dadurch gekennzeichnet, dass** mittels der ersten Dachkinematik das vorderste Dachelement (5) unabhängig von weiteren Dachelementen (9) bewegbar ist.

4. Kraftfahrzeug (1) nach Anspruch 1 bis 3, **dadurch gekennzeichnet, dass** die Fahrzeugdacheinheit mehr als zwei Dachelemente (5, 7, 9) aufweist.

5. Kraftfahrzeug (1) nach einem der vorangegangenen Ansprüchen, **dadurch gekennzeichnet, dass** die Dachelemente (5, 7, 9) durch eine zu diesem Zweck jeweils öffnenbare Heckscheibe (19) und/oder Heckklappe und/oder Hecktür (23) hindurch im Stauraum (25) des Kraftfahrzeugs (1) verstaubar sind.

6. Kraftfahrzeug (1) nach einem der vorangegangenen Ansprüchen, **dadurch gekennzeichnet, dass** zum Verstauen der Dachelemente (5, 7, 9) im Stauraum (25) ein Abschnitt (27) eines diesen nach unten begrenzenden Bodens (21) in eine im Wesentlichen senkrechte Stellung umklappbar ist.

7. Kraftfahrzeug (1) nach einem der vorangegangenen Ansprüchen, **dadurch gekennzeichnet, dass** die zweite Dachkinematik zum Verstauen der Dachelemente (5, 7, 9) zwei Hebel (11, 13) aufweist, welche jeweils beide an einem der Dachelemente (9) drehbar befestigt sind und zugleich um je einen fahrzeugfesten Drehpunkt (15, 17) drehbar sind.

8. Kraftfahrzeug (1) nach einem der vorangegangenen Ansprüchen, **dadurch gekennzeichnet, dass** die Funktionen der erste Dachkinematik und die Funktionen der zweite Dachkinematik in einer gemeinsamen Mechanik verwirklicht sind.

9. Kraftfahrzeug (1) nach einem der vorangegangenen Ansprüchen, **dadurch gekennzeichnet, dass** das Kraftfahrzeug (1) oder die Fahrzeugdacheinheit ferner einen fahrzeugfesten oder mit der Fahrzeugdacheinheit ausklappbaren Windabweiser aufweist.

10. Fahrzeugdacheinheit zum Schließen und Freigeben der Dachöffnung (3) nach einem der vorangegangenen Ansprüche.

11. Fahrzeugdacheinheit nach Anspruch 10, **dadurch gekennzeichnet, dass** diese als Hardtop ausgestaltet ist.

## Claims

1. Motor vehicle (1) with a roof opening (3) and a vehicle roof unit for closing and opening the roof opening (3), wherein the vehicle roof unit has:
at least two roof elements (5, 9),
a first roof operating device, by means of which at least one roof element (5) is movable towards a second roof element (9) to open at least a part of the roof opening,
a second roof operating device, by means of which the roof elements (5, 9) are movable at least partially into a stowage area (25) of the motor vehicle (1),
wherein the second roof operating device has a rotation mechanism (11, 13) fixed to the vehicle, which is fastened to one of the roof elements (9),
wherein at least the roof element (5) at the front in the direction of travel is substantially horizontally displaceable to open a part of the roof opening (3) by means of the first roof operating device,
**characterised in that**
the roof elements (5, 7, 9) stowed in the stowage area (25) of the motor vehicle (1) are positioned substantially vertically therein.

2. Motor vehicle (1) according to claim 1, **characterised in that** at least the roof element (5) at the front in the direction of travel F is displaceable by means of the first roof operating device independently of the second roof operating device.

3. Motor vehicle (1) according to claim 1 or claim 2, **characterised in that** the roof element (5) at the front is movable by means of the first roof operating device independently of further roof elements (9).

4. Motor vehicle (1) according to claim 1 to 3, **characterised in that** the vehicle roof unit has more than two roof elements (5, 7, 9).

5. Motor vehicle (1) according to one of the preceding claims, **characterised in that** the roof elements (5, 7, 9) are stowable in the stowage area (25) of the motor vehicle (1) through a rear window (19) and/or hatchback and/or tailgate (23), which can be respectively opened for this purpose.

6. Motor vehicle (1) according to one of the preceding claims, **characterised in that** for stowage of the roof elements (5, 7, 9) in the stowage area (25) a section (27) of a floor (21) defining this downwards can be folded up into a substantially vertical position.

7. Motor vehicle (1) according to one of the preceding claims, **characterised in that** for stowage of the roof elements (5, 7, 9) the second roof operating device has two levers (11, 13), which are respectively both rotatably fastened to one of the roof elements (9) and at the same time are rotatable around a respective rotation point (15, 17) fixed to the vehicle.

8. Motor vehicle (1) according to one of the preceding claims, **characterised in that** the functions of the first roof operating device and the functions of the second roof operating device are implemented in a joint mechanism.

9. Motor vehicle (1) according to one of the preceding claims, **characterised in that** the motor vehicle (1) or the vehicle roof unit additionally has a wind deflector, which is fixed to the vehicle or can be folded out with the vehicle roof unit.

10. Vehicle roof unit for closing and opening the roof opening (3) according to one of the preceding claims.

11. Vehicle roof unit according to claim 10, **characterised in that** this is configured as a hardtop.

## Revendications

1. Véhicule automobile (1) muni d'une ouverture de toit (3) et d'un assemblage de toit de véhicule pour fermer et ouvrir l'ouverture de toit (3), l'assemblage de toit de véhicule comportant :
au moins deux éléments de toit (5, 9),
une première cinématique de toit, au moyen de laquelle au moins un élément de toit (5) peut être déplacé en direction d'un second élément de toit (9) pour ouvrir au moins une partie de l'ouverture de toit,
une seconde cinématique de toit, au moyen de laquelle les éléments de toit (5, 9) peuvent être déplacés au moins partiellement dans un espace de rangement (25) du véhicule automobile (1), la seconde cinématique de toit comportant un dispositif de rotation (11, 13) solidaire du véhicule, ledit dispositif étant fixé sur l'un des éléments de toit (9),
au moins l'élément de toit (5) situé le plus en avant dans le sens de la marche pouvant être déplacé essentiellement horizontalement au moyen de la première cinématique de toit pour ouvrir une partie de l'ouverture de toit (3),
**caractérisé en ce**
**que** les éléments de toit (5, 7, 9) rangés dans l'espace de rangement (25) du véhicule automobile (1) sont essentiellement positionnés verticalement dans ledit espace.

2. Véhicule automobile (1) selon la revendication 1, **caractérisé en ce que** au moins l'élément de toit (5) situé le plus en avant dans le sens de la marche F peut être déplacé au moyen de la première cinématique de toit indépendamment de la seconde cinématique de toit.

3. Véhicule automobile (1) selon la revendication 1 ou 2, **caractérisé en ce que** au moyen de la première cinématique de toit l'élément de toit (5) situé le plus en avant peut être déplacé indépendamment d'autres éléments de toit (9).

4. Véhicule automobile (1) selon la revendication 1 à 3, **caractérisé en ce que** l'assemblage de toit de véhicule comporte plus de deux éléments de toit (5, 7, 9).

5. Véhicule automobile (1) selon l'une quelconque des revendications précédentes, **caractérisé en ce que** les éléments de toit (5, 7, 9) peuvent être rangés dans l'espace de rangement (25) du véhicule automobile (1), en passant à travers une lunette arrière (19) et/ou hayon et/ou porte arrière (23) pouvant être respectivement ouvert à cet effet.

6. Véhicule automobile (1) selon l'une quelconque des revendications précédentes, **caractérisé en ce que** pour ranger les éléments de toit (5, 7, 9) dans l'espace de rangement (25), une section (27) d'un plancher (21) délimitant ledit espace vers le bas peut être rabattue dans une position essentiellement verticale.

7. Véhicule automobile (1) selon l'une quelconque des revendications précédentes, **caractérisé en ce que** la seconde cinématique de toit destinée à ranger les éléments de toit (5, 7, 9) comporte deux leviers (11, 13) qui sont tous deux respectivement fixés tournant au niveau d'un des éléments de toit (9), et qui en même temps peuvent tourner autour d'un centre de rotation (15, 17) solidaire du véhicule.

8. Véhicule automobile (1) selon l'une quelconque des revendications précédentes, **caractérisé en ce que** les fonctions de la première cinématique de toit et les fonctions de la seconde cinématique de toit sont réalisées dans un mécanisme commun.

9. Véhicule automobile (1) selon l'une quelconque des revendications précédentes, **caractérisé en ce que** le véhicule automobile (1) ou l'assemblage de toit de véhicule comporte en outre un déflecteur solidaire du véhicule ou escamotable avec l'assemblage de toit de véhicule.

10. Assemblage de toit de véhicule pour fermer et ouvrir l'ouverture de toit (3) selon l'une quelconque des revendications précédentes.

11. Assemblage de toit de véhicule selon la revendication 10, **caractérisé en ce que** celui-ci est configuré comme toit rigide rétractable.
